# EUROPEAN PATENT APPLICATION

(11) **EP 4 576 909 A1**
(43) Date of publication of application: **25.06.2025**
(21) Application number: 22955758.2
(22) Date of filing: 19.08.2022
(51) Int. Cl.: H04W 72/23, H04W 56/00, H04W 72/0446, H04W 72/0453

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); ECHIGO, Haruhi, Tokyo 100-6150 (JP); SHIBAIKE, Naoya, Tokyo 100-6150 (JP); NAGATA, Satoshi, Tokyo 100-6150 (JP)
(74) Representative: Hoffmann Eitle
(86) International application number: PCT/JP2022/031402
(87) International publication number: WO 2024/038586

(57) **Abstract**

A terminal according to an aspect of the present disclosure includes a control section that determines one of operation for searching SSBs with all SSB indices in a plurality of synchronization signal block (SSB) groups and operation for searching an SSB with a specific SSB index in the plurality of SSB groups, the plurality of SSB groups being frequency division multiplexed, one of the plurality of SSB groups including a plurality of SSBs to be time division multiplexed, and a receiving section that detects one SSB in the plurality of SSB groups. According to an aspect of the present disclosure, it is possible to enhance coverage in consideration of overhead.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), coverage enhancement is under study.

However, narrowing/increasing beams for the coverage enhancement increases overhead, and communication throughput may be reduced.

Thus, an object of the present disclosure is to provide a terminal, a radio communication method, and a base station that can enhance coverage in consideration of overhead.

### Solution to Problem

A terminal according to an aspect of the present disclosure includes a control section that determines one of operation for searching SSBs with all SSB indices in a plurality of synchronization signal block (SSB) groups and operation for searching an SSB with a specific SSB index in the plurality of SSB groups, the plurality of SSB groups being frequency division multiplexed, one of the plurality of SSB groups including a plurality of SSBs to be time division multiplexed, and a receiving section that detects one SSB in the plurality of SSB groups. Advantageous Effects of Invention

According to an aspect of the present disclosure, it is possible to enhance coverage in consideration of overhead.

### Brief Description of Drawings

[FIG. 1] FIGS. 1A and 1B are diagrams to show examples of a beam and coverage.
[FIG. 2] FIG. 2 is a diagram to show an example of SSBs according to Option 1.
[FIG. 3] FIGS. 3A and 3B are diagrams to show examples of SSBs according to Option 2.
[FIG. 4] FIGS. 4A and 4B are diagrams to show examples of respective measurement targets based on operation B and operation A.
[FIG. 5] FIGS. 5A and 5B are diagrams to show examples of respective receptions based on operation B and operation A.
[FIG. 6] FIGS. 6A and 6B are diagrams to show examples of reception of configured SSBs.
[FIG. 7] FIGS. 7A and 7B are diagrams to show examples of scheduling restriction on another DL signal in a case where all/some of configured SSBs are received.
[FIG. 8] FIGS. 8A and 8B are diagrams to show other examples of the reception of configured SSBs.
[FIG. 9] FIG. 9 is a diagram to show an example of a beam in a cell.
[FIG. 10] FIG. 10 is a diagram to show an example of Selection Method 1.
[FIG. 11] FIGS. 11A and 11B are diagrams to show examples of Selection Method 2.
[FIG. 12] FIGS. 12A and 12B are diagrams to show other examples of Selection Method 2.
[FIG. 13] FIG. 13 is a diagram to show an example of an SSB detection method according to Embodiment 1-1.
[FIG. 14] FIG. 14 is a diagram to show an example of an SSB detection method according to Option 1-1-2.
[FIG. 15] FIG. 15 is a diagram to show an example of an SSB detection method according to Embodiment 1-2.
[FIG. 16] FIG. 16 is a diagram to show another example of the SSB detection method according to Embodiment 1-2.
[FIG. 17] FIGS. 17A and 17B are diagrams to show examples of an SSB detection method according to Embodiment 1-2-1.
[FIG. 18] FIGS. 18A and 18B are diagrams to show an example of time/frequency mapping between SSBs according to Embodiment 1-3-1 and an example of time/frequency mapping between SSBs according to Embodiment 1-3-2, respectively.
[FIG. 19] FIGS. 19A and 19B are diagrams to show examples of SSB mapping according to Embodiment 1-4.
[FIG. 20] FIG. 20 is a diagram to show an example of a PRACH resource/preamble according to a second embodiment.
[FIG. 21] FIG. 21 is a diagram to show an example of an RAR according to a third embodiment.
[FIG. 22] FIG. 22 is a diagram to show another example of the RAR according to the third embodiment.
[FIG. 23] FIG. 23 is a diagram to show an example of a schematic structure of a radio communication system according to one embodiment.
[FIG. 24] FIG. 24 is a diagram to show an example of a structure of a base station according to one embodiment.
[FIG. 25] FIG. 25 is a diagram to show an example of a structure of a user terminal according to one embodiment.
[FIG. 26] FIG. 26 is a diagram to show an example of a hardware structure of the base station and the user terminal according to one embodiment.
[FIG. 27] FIG. 27 is a diagram to show an example of a vehicle according to one embodiment.

### Description of Embodiments

### (TCI, Spatial Relation, QCL)

For NR, it is studied that reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE are controlled based on a transmission configuration indication state (TCI state).

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Initial Access Procedure)

In initial access procedure, the UE (RRC_IDLE mode) performs reception of an SS/PBCH block (SSB), transmission of Msg. 1 (PRACH / random access preamble / preamble), reception of Msg. 2 (PDCCH, PDSCH including a random access response (RAR)), transmission of Msg. 3 (PUSCH scheduled by an RAR UL grant), and reception of Msg. 4 (PDCCH, PDSCH including UE contention resolution identity). Subsequently, when an ACK for Msg. 4 is transmitted from the UE by a base station (network), an RRC connection is established (RRC_CONNECTED mode).

The reception of the SSB includes PSS detection, SSS detection, PBCH-DMRS detection, and PBCH reception. The PSS detection performs detection of part of a physical cell ID (PCI), detection (synchronization) of an OFDM symbol timing, and (coarse) frequency synchronization. The SSS detection includes detection of the physical cell ID. The PBCH-DMRS detection includes detection of (part of) an SSB index in a half radio frame (5 ms). The PBCH reception includes detection of a system frame number (SFN) and a radio frame timing (SSB index), reception of configuration information for remaining minimum system information (RMSI, SIB1) reception, and recognition of whether the UE can camp on that cell (carrier).

The SSB includes a band of 20 RBs and time of 4 symbols. A transmission periodicity of the SSB is configurable from {5, 10, 20, 40, 80, 160} ms. In the half frame, a plurality of symbol locations of the SSB are defined based on a frequency range (FR1, FR2).

The PBCH includes a 56-bit payload. N repetitions of the PBCH are transmitted in a periodicity of 80 ms. N depends on the transmission periodicity of the SSB.

The system information consists of an MIB, RMSI (SIB1), and other system information (OSI) delivered by the PBCH. The SIB1 includes a RACH configuration, and information for RACH procedure. A time/frequency resource relationship between the SSB and a PDCCH monitoring resource for the SIB1 is configured by the PBCH.

The base station that uses beam correspondence transmits a plurality of SSBs by using a plurality of respective beams every SSB transmission periodicity. The plurality of SSBs include a plurality of respective SSB indices. The UE that has detected one SSB transmits a PRACH in a RACH occasion associated with the SSB index, and receives an RAR in an RAR window.

The UE receives (PSS/SSS included in) an SSB in initial access. A frequency at which the UE searches the PSS/SSS may be referred to as a synchronization raster.

The synchronization raster is defined for each frequency range (FR1/FR2).

The wider frequency spacing between synchronization rasters is (the smaller the number of synchronization rasters is), the shorter time required for search in initial access is, thereby leading to reduced load.

A candidate for a frequency location where a component carrier (CC) is arranged is referred to as a channel raster.

The spacing between the synchronization rasters is determined so that a specific condition is satisfied. Specifically, the spacing between the synchronization rasters is determined so that in whichever channel raster a CC is arranged at a minimum channel bandwidth (CBW), at least one synchronization raster in which the CBW includes a band for an SSB is present.

In initial access, which order the UE searches synchronization rasters in is up to UE implementation. For efficient search, a Global Synchronization Channel Number (GSCN) is defined, and the UE is notified of GSCN offset / GSCN range.

A search target frequency for the PSS/SSS in a case other than the initial access is indicated for the UE from a network (NW, for example, base station).

For example, when RSRP/RSRQ/SINR measurement for a neighboring cell is indicated, an SSB frequency is indicated for the UE by using a higher layer parameter "MeasObjectNR."

For example, when addition of a serving cell is indicated, the SSB frequency is indicated for the UE by using a higher layer parameter "Frequency InfoDL."

For example, in a case of an idle mode, the SSB frequency is indicated for the UE by using SIB4 (InterFreqCarrierFreqInfo).

### (Beam and Coverage)

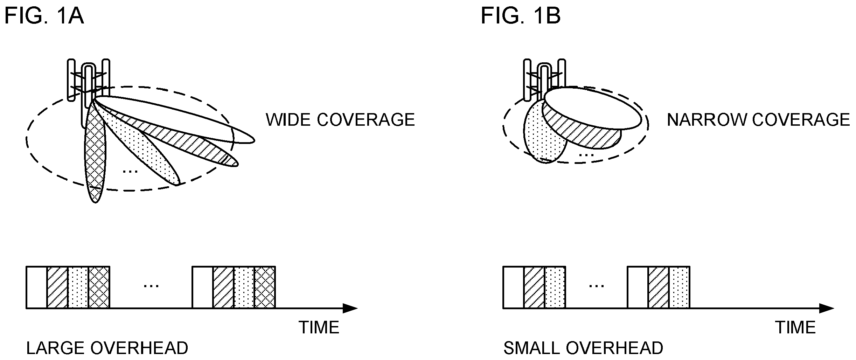

In a high frequency band, unless beam forming is applied to a synchronization signal / reference signal, coverage becomes narrow, thereby making it difficult for the UE to identify the base station. On the other hand, applying the beam forming to the synchronization signal / reference signal to secure coverage allows a strong signal to be delivered in a specific direction, but makes it more difficult for signals to be delivered in directions other than the direction (FIG. 1A). Assuming that a direction of the presence of the UE is unknown in the base station before the UE is connected, transmission of the synchronization signal / reference signal using a beam only in an appropriate direction is unavailable. A conceivable method includes a method in which the base station transmits a plurality of synchronization signals / reference signals including respective beams in different directions, and recognizes which beam is identified by the UE. Using thin (narrow) beams for coverage requires transmission of many synchronization signals / reference signals, and thus overhead increases, and frequency use efficiency may be reduced.

Using thick (wide) beams to suppress overhead by reducing the number of beams (synchronization signals / reference signals) narrows coverage (FIG. 1B).

In future radio communication systems (for example, 6G), it is conceivable that use of frequency bands, such as millimeter waves and terahertz waves, advances further. It is conceivable that communication services are provided by constructing a cell area/coverage by using multiple thin beams.

Area expansion using existing FR2 and use of a higher frequency band than existing FR2 are conceivable. For achieving these, improvement in beam management in addition to multi-TRP, reconfigurable intelligent surface (RIS), and the like is preferable.

In existing 5G NR, a maximum number of synchronization signal blocks (SSBs) is 64. A cell area (surface) is required to be covered by using up to 64 beams, and thus it is difficult to use thin beams. For use of multiple thin beams, Beam management methods 1 and 2 below are conceivable.

### {Beam Management Method 1}

Using more than 64 SSBs (a maximum number of SSBs exceeding 64). Simply increasing the number of SSBs may increase SSB overhead / initial access latency.

### {Beam Management Method 2}

Using up to 64 SSBs (a maximum number of SSBs being 64). Reducing an area (face) covered by one cell/sector. Inter-cell/sector interference or fast/frequent inter-cell/sector handover may be an issue.

In Beam Management Method 1, Options 1 and 2 below are under study for SSB management.

### {Option 1}

More than 64 SSBs are transmitted by using time division multiplexing (TDM).

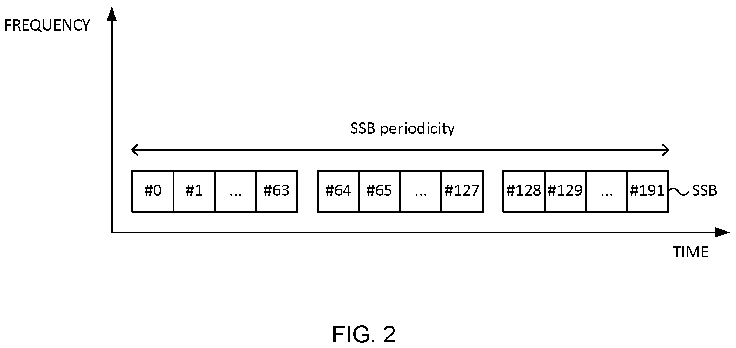

FIG. 2 is a diagram to show an example of the SSBs according to Option 1. In the example shown in FIG. 2, more than 64 SSBs (SSB #0 to SSB #191) are TDMed, and the resultant SSBs are transmitted.

As shown in FIG. 2, it is conceivable that Option 1 requires an SSB periodicity longer than such an SSB periodicity of 64 SSBs as that of an existing specification, thereby increasing latency in initial access.

### {Option 2}

More than 64 SSBs are transmitted by using time division multiplexing (TDM) and frequency division multiplexing (FDM).

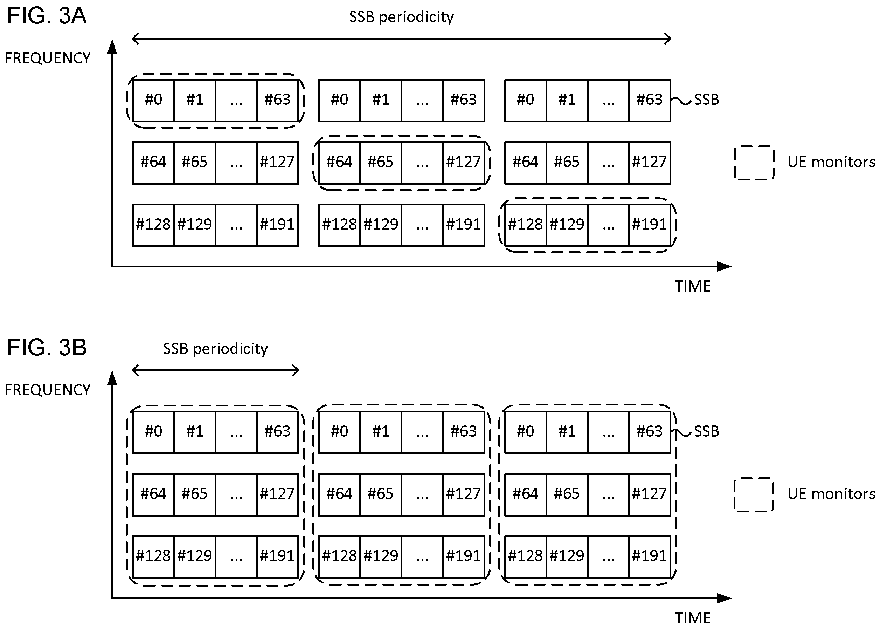

FIGS. 3A and 3B are diagrams to show examples of the SSBs according to Option 2. In each of the examples shown in FIGS. 3A and 3B, more than 64 SSBs (SSB #0 to SSB #191) are TDMed and FDMed, and the resultant SSBs are transmitted.

In each of the examples shown in FIGS. 3A and 3B, 3 sets are FDMed, each set consisting of one set of 64 SSBs (SSB #0 to SSB #63, SSB #64 to SSB #127, SSB #128 to SSB #191).

In Option 2, an SSB periodicity for the UE differs depending on whether the UE includes a plurality of reception panels.

### [Option 2-1]

For example, the UE including one reception panel can receive one SSB in the same time resource. Accordingly, (up to) 64 SSBs are received in each FDMed set, thereby requiring an SSB periodicity longer than such an SSB periodicity of 64 SSBs as that of the existing specification, and thus it is conceivable that latency in initial access increases (see FIG. 3A).

### [Option 2-2]

For example, the UE including a plurality of reception panels can receive a plurality of SSBs in the same time resource. Accordingly, more than 64 (in FIG. 3B, 192) SSBs are received in each FDMed set, and thus reception can be performed at the same frequency as such an SSB periodicity of 64 SSBs as that of the existing specification (see FIG. 3B).

Thus, for future radio communication systems, management of SSBs more than the number defined in the existing specification is under study. However, for such a case, a study has not been sufficiently made on an SSB reception/search method, UE implementation, a method for random access procedure, and the like. Unless these studies are sufficiently performed, overhead increases, and communication throughput may be reduced.

Hence, the inventors of the present invention came up with the idea of a method for suppressing overhead / initial access latency.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support, " "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a reception panel, a reception chain, a UE panel, a panel group, an antenna group, a UE capability value, a UE capability value set, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, an SSB/CSI-RS index/indicator and a beam index may be interchangeably interpreted.

### (Radio Communication Method)

In each embodiment of the present disclosure, an SSB may mean an SSB configured to be measured by the UE. For example, the SSB may be an SSB configured for specific usage (for example, at least one of beam management, radio link monitoring, radio resource management, and beam failure detection).

In each embodiment of the present disclosure, an SSB will be primarily described as an example of thereof, but a reference signal / synchronization signal is not limited to an SSB. A reference signal in each embodiment of the present disclosure. A synchronization signal, an SSB, a CSI-RS, a DL-RS, a TRS, a beam, and a TCI state may be interchangeably interpreted.

In each embodiment, a duration, a time domain, a frame, a subframe, a slot, a sub-slot, and a symbol may be interchangeably interpreted.

In each embodiment, a group, a set, an SSB to be measured, a specific SSB, and a specific reference signal (RS) may be interchangeably interpreted.

In each embodiment, the number of SSBs may differ from an existing number of SSBs, may be greater than the existing number of SSBs, or may be greater than 64.

In the present disclosure, in addition to a case where SSBs are TDMed with each other, a case where SSBs are FDMed with each other will be primarily described. However, the FDM is merely an example, and SSBs may be spatial division multiplexed (SDMed) / code division multiplexed (CDMed) with each other. In other words, in the present disclosure, SSBs may be TDMed/FDMed/SDMed/CDMed with each other. In the present disclosure, TDM, FDM, SDM, and CDM may be interchangeably interpreted.

Each embodiment of the present disclosure may be applied to a licensed band (licensed spectrum) or an unlicensed band (shared spectrum).

Each embodiment of the present disclosure may be applied only to operation for reference signal / synchronization signal reception in a case other than initial access. The case other than the initial access may be, for example, at least one of a case where RSRP/RSRQ/SINR measurement for a neighboring cell is indicated, a case where addition of a serving cell is indicated, a case of handover, and a case of an idle mode.

In the present disclosure, an SSB index/indicator and a beam index may be interchangeably interpreted.

In the present disclosure, reception, measurement, detection, search, and monitoring may be interchangeably interpreted. In the present disclosure, reception (or transmission), reception (or transmission) operation, and control of reception (or transmission) may be interchangeably interpreted.

### <Zero-th Embodiment>

This embodiment relates to switching of a measurement target.

A UE may be configured with a plurality of beams (reception of SSBs). The UE may receive/measure/detect all of the plurality of configured beams (SSBs). The UE may receive/measure/detect some of the plurality of configured beams (SSBs).

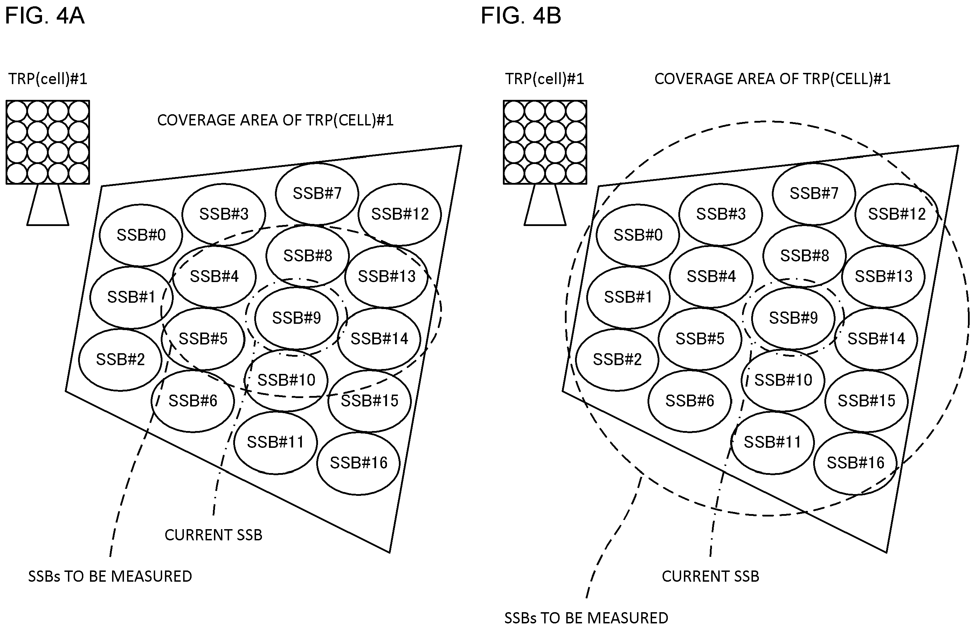

Switching between operation A (FIG. 4B) for reception/measurement/detection of all the configured SSBs and operation B (FIG. 4A) for reception/measurement/detection of specific (some) SSB(s) from among all the configured SSBs may be performed. The UE may determine one of operation A and operation B. A base station may indicate/configure one of operation A and operation B.

Switching from operation A to operation B allows unnecessary SSB reception/measurement/detection to be avoided, thereby allowing time/latency required for SSB reception/measurement/detection to be reduced. SSB reception/measurement/detection is not performed in a partial duration, thereby allowing scheduling restriction to be avoided and allowing throughput to be increased.

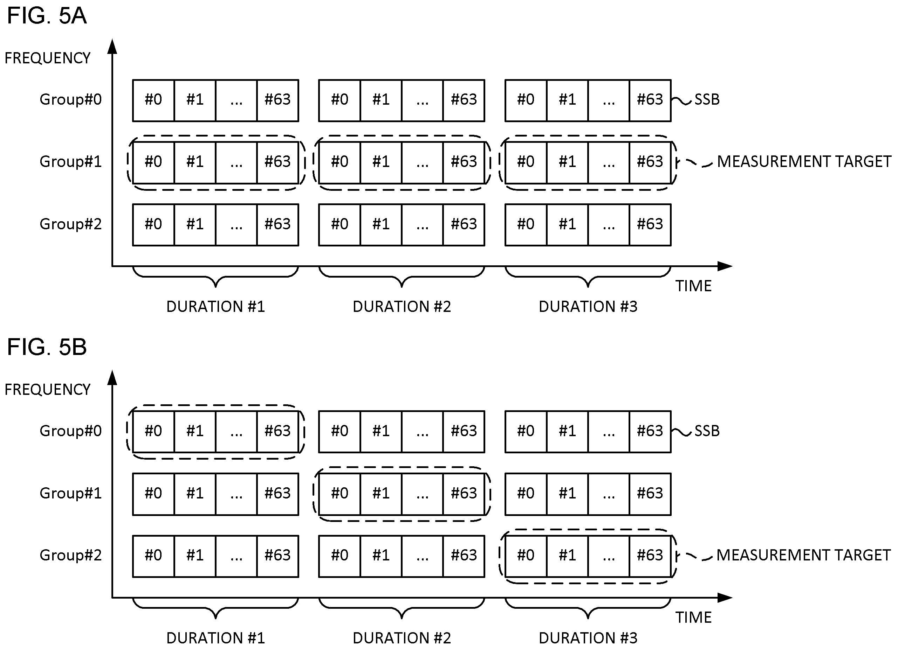

In examples in FIGS. 5A and 5B, groups #0 to #2 are transmitted. Each of groups #0 to #2 includes SSB #0 to SSB #63. FIG. 5A shows an example of operation B. The UE selects group #1 as a measurement target from configured groups #0 to #2 and performs reception/measurement/detection of only group #1, thereby allowing reception/measurement/detection of all of SSBs #0 to #63 as a measurement target to be completed in only one of durations #1 to #3, which suppresses latency in measurement. FIG. 5B shows an example of operation A. The UE performs reception/measurement/detection of all the SSBs in configured groups #0 to #2, thereby allowing reception/measurement/detection of all the SSBs to be completed in durations #1 to #3.

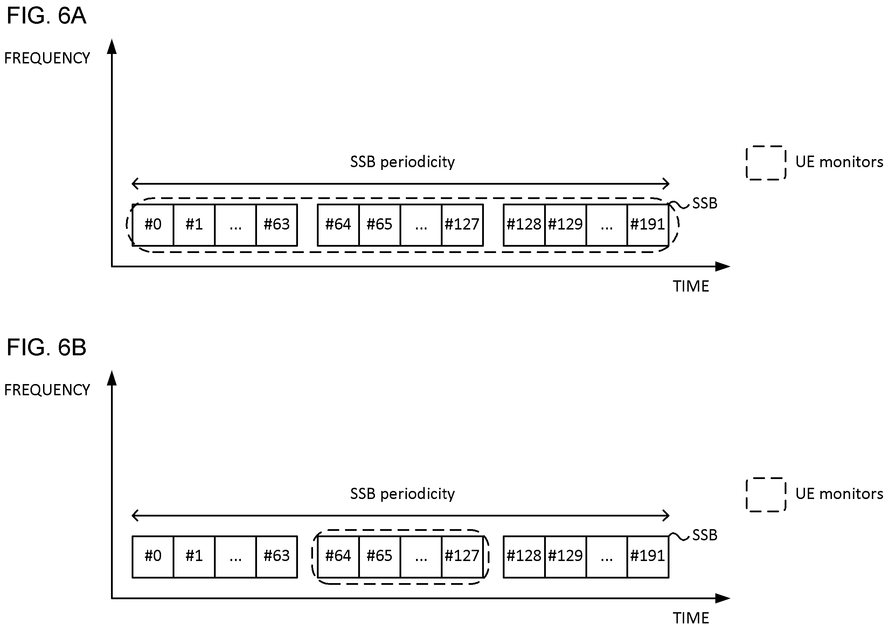

In Option 1 described above, the UE may receive/measure/detect/search all of the configured SSBs (see FIG. 6A).

The UE may be, for example, a UE including one reception panel or a UE using one reception panel.

In an example shown in FIG. 6A, when the number of SSBs configured for the UE is N×64, an SSB periodicity is N times as large as that of an existing specification (Rel. 15/16/17 (or earlier versions)).

In Option 1 described above, the UE may receive/measure/detect/search some (specific SSB) of the configured SSBs (see FIG. 6B).

The UE may be, for example, a UE including one reception panel or a UE using one reception panel.

In an example shown in FIG. 6B, even when the number of SSBs configured for the UE is N×64, an SSB periodicity can be equal to that of the existing specification (Rel. 15/16/17 (or earlier versions)).

In such a case as that shown in FIG. 6B, SSBs other than a measurement target can be configured not to be measured, thereby allowing power consumption to be reduced.

In Option 1, the UE may determine one of operation for reception/measurement/detection/search of all of the configured SSBs (operation A) and operation for reception/measurement/detection/search of some of the configured SSBs (operation B). In Option 1, the UE may perform switching between the operation for reception/measurement/detection/search of all of the configured SSBs (operation A) and the operation for reception/measurement/detection/search of some of the configured SSBs (operation B).

According to the existing specification, in a specific frequency range (for example, FR2), another DL signal of QCL type D different from that of an SSB cannot be received in symbols of the SSB (scheduling restriction is imposed on such another DL signal). Accordingly, in such a case as that shown in FIG. 6B, the symbols of the SSB can be reduced, and thus reception occasions for such another DL signal of QCL type D different from that of the SSB can be increased.

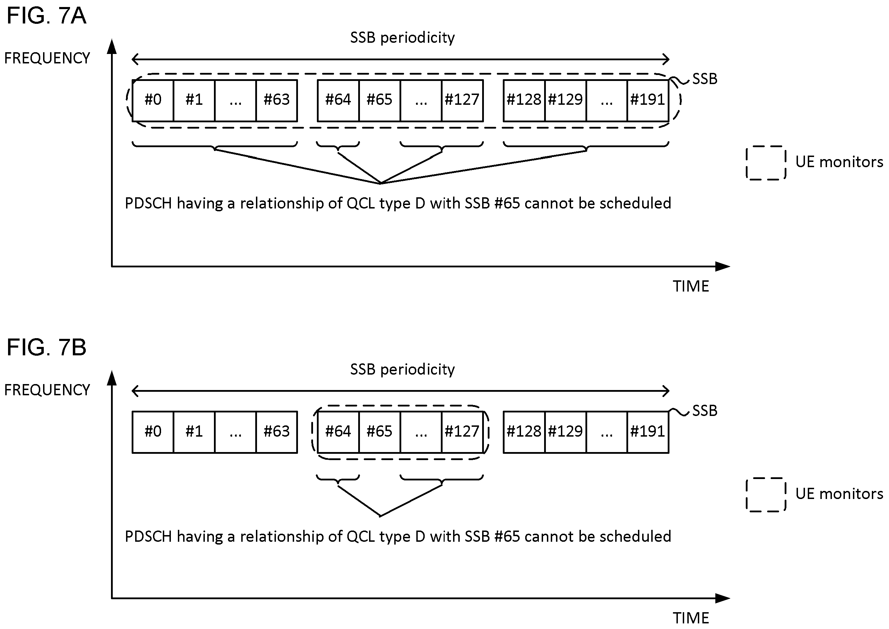

FIG. 7A is a diagram to show an example of the scheduling restriction on such another DL signal in a case where all of the configured SSBs are received. FIG. 7A corresponds to FIG. 6A described above.

In the example shown in FIG. 7A, for the UE, a DL signal (for example, a PDSCH) having a relationship of QCL type D with SSB #65 can be scheduled in the same time domain as that of SSB #65. On the other hand, for the UE, a DL signal (for example, a PDSCH) having a relationship of QCL type D with SSB #65 is not scheduled in a time domain different from that of SSB #65 (same time domain as that of an SSB other than SSB #65).

FIG. 7B is a diagram to show an example of the scheduling restriction on such another DL signal in a case where some of the configured SSBs are received. FIG. 7B corresponds to FIG. 6B described above.

In the example shown in FIG. 7B, for the UE, a DL signal (for example, a PDSCH) having a relationship of QCL type D with SSB #65 can be scheduled in the same time domain as that of SSB #65. On the other hand, for the UE, a DL signal (for example, a PDSCH) having a relationship of QCL type D with SSB #65 is not scheduled in the same time domains as those of SSB #64 and SSBs #66 to #127, from among time domains different from that of SSB #65.

Note that the present disclosure describes a case where the number of DL signals of different QCL type D capable of being simultaneously received is one, but the number is not limited to this. The number may be two or more, and may be predefined in a specification, may be a value reported by UE capability information, or may be configured for / notified to the UE by higher layer signaling.

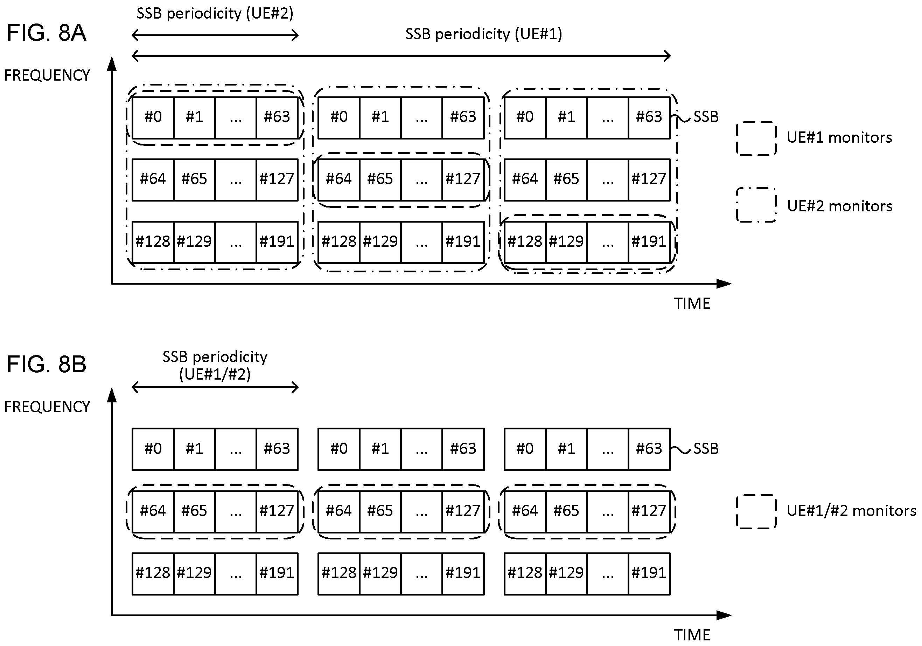

In Option 2 described above, the UE may receive/measure/detect/search all of the configured SSBs (see FIG. 8A).

The UE may be, for example, a UE including one reception panel or a UE using one reception panel (UE #1 in FIG. 8A). The UE may be, for example, a UE including a plurality of reception panels or a UE using a plurality of reception panels (UE #2 in FIG. 8A).

In an example shown in FIG. 8A, when the number of SSBs configured for the UE is N×64, an SSB periodicity for UE #1 is N times as large as that of the existing specification (Rel. 15/16/17 (or earlier versions)). In this case, an SSB periodicity for UE #2 is equivalent to (equal to) that of the existing specification (Rel. 15/16/17 (or earlier versions)).

In Option 2 described above, the UE may receive/measure/detect/search some of the configured SSBs (see FIG. 8B).

The UE may be, for example, a UE including one reception panel or a UE using one reception panel (UE #1 in FIG. 8B). The UE may be, for example, a UE including a plurality of reception panels or a UE using a plurality of reception panels (UE #2 in FIG. 8B).

The UE may receive/measure/detect/search, for some of the configured SSBs, an SSB in a specific frequency resource (SSBs #64 to #127 in FIG. 8B).

In an example shown in FIG. 8B, even when the number of SSBs configured for the UE is N×64, an SSB periodicity for UE #1 and UE #2 is equivalent to (equal to) that of the existing specification (Rel. 15/16/17 (or earlier versions)).

In such a case as that shown in FIG. 8B, SSBs other than a measurement target can be configured not to be measured, thereby allowing power consumption to be reduced.

In Option 2, the UE may determine one of operation for reception/measurement/detection/search of all of the configured SSBs (operation A) and operation for reception/measurement/detection/search of some of the configured SSBs (operation B). In Option 2, the UE may perform switching between the operation for reception/measurement/detection/search of all of the configured SSBs (operation A) and the operation for reception/measurement/detection/search of some of the configured SSBs (operation B).

### <First Embodiment>

A first embodiment relates to initial access operation.

A UE may search all the beams in reception of the first SSB (in initial access). The UE may search some (specific) beams in the reception of the first SSB (in initial access).

In the initial access, PRACH resources/preambles corresponding to SSBs may be configured. The number of configured/transmitted SSBs and the number of PRACH resources/preambles may be equal to each other.

In the initial access, the number of random access response (RAR) receiving windows may be less than the number of configured/transmitted SSBs. One RAR receiving window may correspond to a plurality of PRACH resources/preambles.

After RRC connection, for the UE, a beam (TCI state / QCL) may be indicated from a NW.

The UE may perform beam measurement/reporting, based on an indicated TCI state, by using some SSBs (SSB subset).

The UE may perform beam failure detection / radio link failure detection, based on an indicated TCI state or a TCI state of a PDCCH.

The UE may determine a candidate beam in beam failure recovery, based on an indicated TCI state or a TCI state of a PDCCH. For example, the UE may determine the candidate beam by using some SSBs (SSB subset). When failing to detect, in the SSB subset, a new beam exceeding a certain quality, the UE may change (switch) the SSB subset to search/determine the candidate beam.

The update (switching) of the SSB subset to be measured may be performed by using higher layer signaling (RRC / MAC CE)/ DCI.

For example, the update (switching) of the SSB subset to be measured may be performed in conjunction with / based on an indicated TCI state of a unified TCI state defined in Rel. 17.

A method for determining the above-described SSB subset will be described below.

In Rel. 15, the UE measures all the configured/defined SSBs and reports/uses a beam with the best measurement result. In random access channel (RACH) transmission, the UE transmits a PRACH in a physical random access channel (PRACH) occasion corresponding to an SSB with the highest received power. In layer 1 (L1) beam reporting after RRC connection establishment, the UE reports, to the base station, one/two/four SSB resource indicators (SSBRIs) / CSI-RS resource indicators (CRIs) with the highest L1-reference signal received power (RSRP) / L1-signal-to-interference and noise ratio (SINR), from among configured SSBs/CSI-RSs, and an L1-RSRP/L1-SINR value.

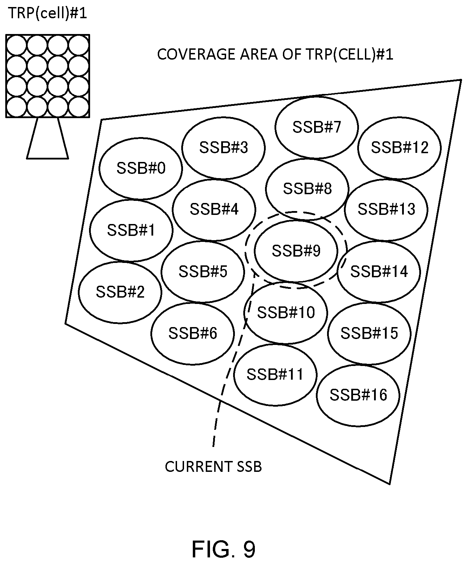

An increased number of beams requires time for search of all the beams, thereby leading to inefficiency. When switching beams, it is assumed that a beam in use is switched to a beam around the beam, and thus the UE may not search all the beams. For example, in an example in FIG. 9, it can be expected that a beam of SSB #9 in use from among SSBs #0 to #16 in a cover area of TRP (cell) #1 is switched to one of SSBs #4, #5, #6, #8, #10, #13, #14, and #15 around SSB #9.

The UE may select a specific SSB (to be measured) from all the (configured/defined) SSBs and perform reception/measurement/detection of the specific SSB.

A trigger for the reception/measurement/detection of the SSB may be at least one or all of measurement/reporting of L1-RSRP/L1-SINR/L3-RSRP/L3-SINR, determination of a PRACH occasion for PRACH transmission, determination of a new beam RS in BFR, and measurement for event-based beam reporting. The UE may report, to the base station, the top X indices of measurement results from among SSB indices to be measured.

An index of a current SSB (in use) may be a TCI state / spatial relation configured for a current PDCCH/PDSCH/PUCCH/PUSCH/SRS/CSI-RS, may be a TCI state configured for a PDCCH, may be a DL TCI state or a joint TCI state configured for a unified TCI state (common TCI state), or may be an SSB/CSI-RS index (SSBRI/CRI) corresponding to an index of the best beam reported by L1-RSRP/L1-SINR beam reporting.

A method for selecting the specific SSB may follow at least one of Selection Methods 1 and 2 below.

### {Selection Method 1}

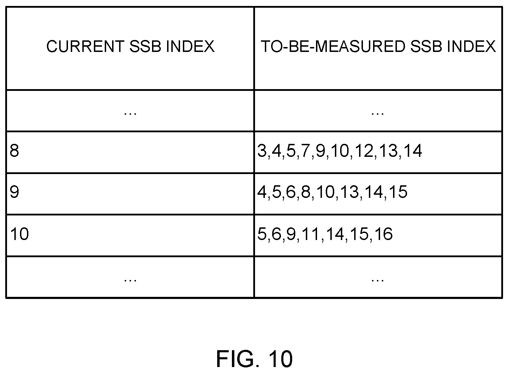

Correspondence between an index of the current SSB and an index of the SSB to be measured (association, a relationship of state transition from the index of the current SSB to the index of the SSB to be measured) may be notified/configured. In an example in FIG. 10, the correspondence may indicate association between each index of the current SSB and an index (indices) of one or more SSBs to be measured.

When judging whether to perform beam switching, the UE may judge whether a measurement result of the SSB to be measured is better or worse than a measurement result of the current SSB. Even when an index of the SSB to be measured is not explicitly notified, the index of the SSB to be measured may include an index of the current SSB. Note, however, that, in determination of the new beam RS in BFR, an index of the current SSB corresponds to a beam with failure (failed beam), and thus may not be included in an index of the SSB to be measured.

### {Selection Method 2}

The UE may determine an index of the (specific) SSB to be measured (plurality of SSB indices), based on an index of the current SSB, in accordance with a rule. The rule may be at least one of Rules 1 to 4 below.

### {{Rule 1}}

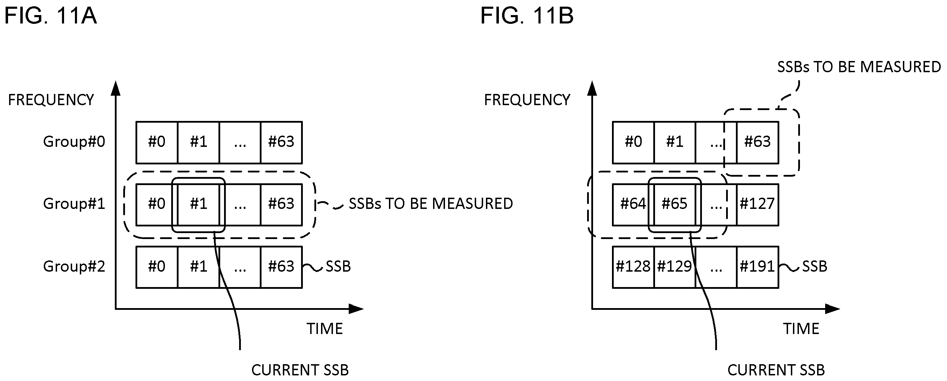

When the groups in the first embodiment are defined, the index of the SSB to be measured may be indices of all the SSBs in a group including the index of the current SSB, or may be SSB indices in the group excluding the index of the current SSB. In an example in FIG. 11A, group #1 includes current SSB #1. The UE may select, as a measurement target, SSB# 0 to SSB #63 in same group #1 as that for the current SSB.

The number of SSBs to be measured is limited to a specific number of SSBs in one duration/periodicity or less, thereby allowing the UE to receive/measure/detect all the SSBs to be measured in one duration/periodicity. The specific number may be the number of SSBs in one group.

The number of SSBs to be measured may not be limited to the specific number of SSBs in one duration/periodicity or less. In this case, the UE may receive one SSB in the same symbol and receive/measure/detect all the SSBs to be measured over a plurality of durations/periodicities, or may receive a plurality of SSBs in the same symbol by using a plurality of panels and receive/measure/detect all the SSBs to be measured in one duration/periodicity.

### {{Rule 2}}

The index of the SSB to be measured may be a certain number of SSB indices before and after the index of the current SSB, or may be a certain number of SSB indices within a range including the index of the current SSB. For example, when an index of the current SSB and the number of indices of SSBs to be measured are m and N, respectively, a range of the indices of the SSBs to be measured may be N SSB indices from SSB index m-floor(N/2) to SSB index m+ceil(N/2)-1.

An expression for computing the index of the SSB to be measured is not limited to this expression. The index of the SSB to be measured may be N+1 SSB indices from SSB index m-floor(N/2) to SSB index m+ceil(N/2) (centered on an index m of the current SSB), or may be N SSB indices obtained by excluding the index m of the current SSB from N+1 SSB indices from SSB index m-floor(N/2) to SSB index m+ceil(N/2) (centered on the index m of the current SSB). In place of floor/ceil, floor/ceil/round may be used. When an index of the current SSB is configured with a distance D from m, the index of the SSB to be measured may be 2D+1 SSB indices from SSB index m-D to SSB index m+D (centered on an index m of the current SSB), or may be 2D SSB indices obtained by excluding the index m of the current SSB from 2D+1 SSB indices from SSB index m-D to SSB index m+D (centered on the index m of the current SSB). The index of the SSB to be measured may be indices with a specific interval (for example, 2) (centered on the index m of the current SSB).

The index of the SSB to be measured may be given by mod(p, Q) so as to prevent an SSB index p obtained by the computation expression from exceeding the number Q of SSB indices or becoming negative.

The SSB groups may not be used. In an example in FIG. 11B, when SSBs #0 to #191 are transmitted, the current SSB is SSB #65, and the number N of SSBs to be measured is 5, the SSBs to be measured may be SSBs #63 to #67.

Indices of the SSBs to be measured may be discontinuous. For example, indices of the SSBs to be measured may be present in every other index.

### {{Rule 3}}

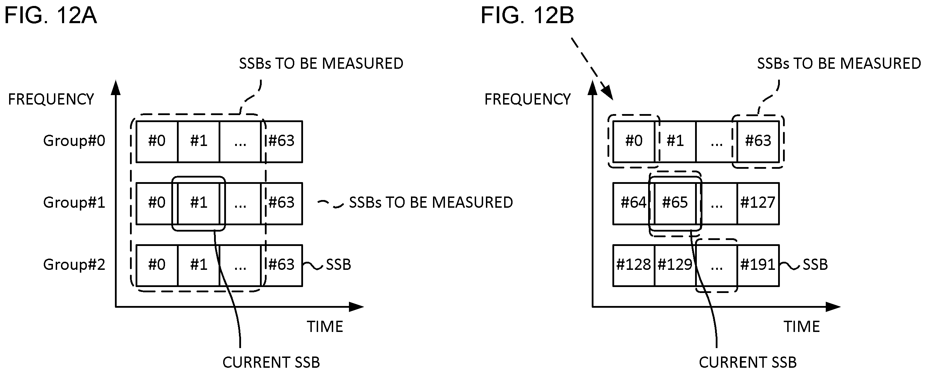

The SSB to be measured may be SSBs adjacent to each other on a time axis and adjacent to the current SSB on a frequency axis (SSBs around / adjacent to the current SSB in a time/frequency plane). In an example in FIG. 12A, groups #0 to #2 are transmitted and each of groups #0 to #2 includes SSBs #0 to #63. The current SSB is SSB #1 of group #1, and the SSB to be measured includes SSBs #0 to #2 of group #0, SSBs #0 to #2 of group #1, and SSBs #0 to #2 of group #2.

In this case, the SSB to be measured may include a plurality of SSBs in the same symbol. In this case, the UE may receive one SSB in the same symbol and receive/measure/detect all the SSBs to be measured over a plurality of durations/periodicities, or may receive a plurality of SSBs in the same symbol by using a plurality of panels and receive/measure/detect all the SSBs to be measured in one duration/periodicity.

### {{Rule 4}}

The SSB to be measured may be determined based on addition of n to an index in a time direction of the current SSB and addition of m to the index in a frequency direction of the current SSB. In an example in FIG. 12B, SSBs #0 to #191 are transmitted, n = 1, and m = 1. The current SSB is SSB #0, and a next SSB to be measured is SSB #65 obtained by adding 1 to the index in the time direction and adding 1 to the index in the frequency direction. A next SSB to be measured is SSB #131 obtained by adding 1 to the index in the time direction and adding 1 to the index in the frequency direction.

### <<Embodiment 1-1>>

A UE in Embodiment 1-1 may be, for example, a UE including one reception panel or a UE using one reception panel.

The UE may receive a synchronization signal (SSB (PSS/SSS)). The UE may receive the synchronization signal in a synchronization raster.

After detection of the SSB (which may be referred to as a detected SSB), the UE may identify a resource of another SSB. The SSB may be TDMed/FDMed.

The UE may identify an SSB to be TDMed in a manner similar to that of an existing specification (Rel. 15 to 17).

The UE may identify/determine/judge an SSB to be FDMed, based on a specific method.

For example, the UE may identify/determine/judge another SSB to be FDMed with the detected SSB, based on offset for the detected SSB.

The frequency offset may be predefined in a specification, may be broadcast by a system information block (SIB) / physical broadcast channel (PBCH), or may be configured by using higher layer signaling.

The frequency offset may be defined/configured for each subcarrier spacing (SCS) / band / frequency range, or may be common to a plurality of SCSs / bands / frequency ranges.

The UE may judge/understand an SSB index of the detected SSB.

Time/frequency-related mapping between SSBs (which may be referred to as, for example, two-dimensional time/frequency mapping between SSBs) may be defined. For example, when a maximum number of SSBs in the time direction is M, each SSB index of the SSB to be FDMed may be incremented by M.

For example, in a case where an SSB index of the SSB detected by the UE is 64 and where a maximum number of SSBs in the time direction is 64, the UE may judge that shifting, by the frequency offset, the SSB index in a negative direction of the frequency direction leads to the presence of an SSB resource with an SSB index 0 and that shifting, by the frequency offset, the SSB index in a positive direction of the frequency direction leads to the presence of an SSB resource with an SSB index 128.

A maximum number of SSBs in the frequency direction may be predefined in a specification, may be broadcast by an SIB/PBCH, or may be configured by using higher layer signaling.

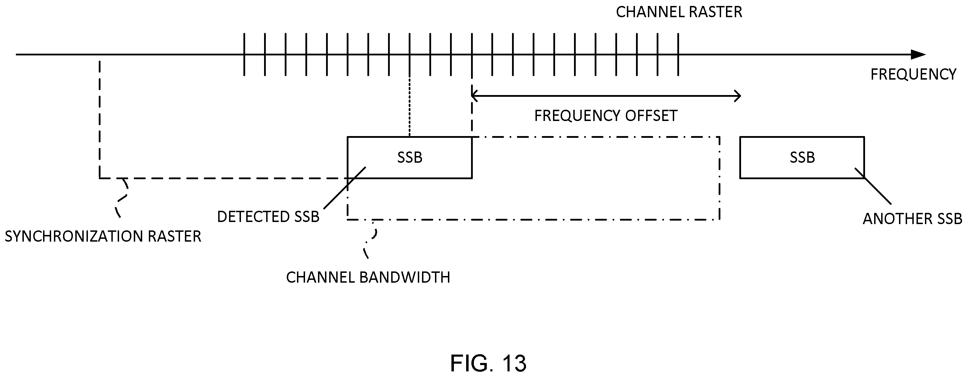

FIG. 13 is a diagram to show an example of an SSB detection method according to Embodiment 1-1. In the example shown in FIG. 13, the UE searches a synchronization raster and detects an SSB. Subsequently, the UE judges (resource) of another SSB to be FDMed with the detected SSB, based on predefined/configured frequency offset.

The number of SSBs in the SSB detection by the UE will be described below.

The UE may not assume/expect detection of a plurality of SSBs in one synchronization raster (Option 1-1-1). According to this, processing load on the UE can be reduced.

In Option 1-1-1, the frequency offset for the SSB may be greater (wider) than a width of the synchronization raster. In this case, a plurality of SSBs to be FDMed are not detected in one synchronization raster.

In Option 1-1-1, the frequency offset for the SSB may be smaller (narrower) than the width of the synchronization raster. In this case, the UE may detect/determine only one SSB in the synchronization raster. The one SSB may be, for example, an SSB having the highest correlation (for example, RSRP/RSRQ/SINR). The UE may not detect an SSB other than the SSB having the highest correlation (for example, RSRP/RSRQ/SINR).

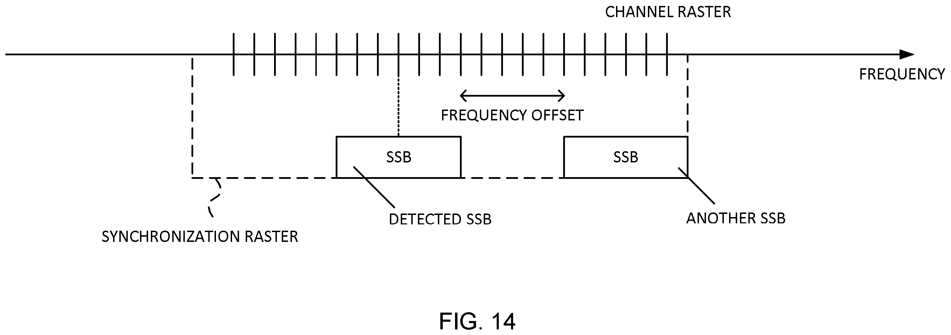

The UE may assume/expect detection of a plurality of SSBs in one synchronization raster (Option 1-1-2). As shown in FIG. 14, the frequency offset may be defined/configured such that the synchronization raster includes a plurality of SSBs.

The UE may perform initial access, under assumption that a specific SSB (for example, with the highest received power / quality (for example, RSRP/RSRQ/SINR)) of a plurality of detected SSBs.

### <<Embodiment 1-2>>

A UE in Embodiment 1-2 may be, for example, a UE including a plurality of reception panels or a UE using a plurality of reception panels.

The UE may receive a synchronization signal (SSB (PSS/SSS)). The UE may receive the synchronization signal in a synchronization raster.

The UE may search a synchronization signal by simultaneously using a plurality of synchronization rasters. According to this, time for synchronization signal detection by the UE can be reduced.

The number of synchronization rasters capable of being simultaneously searched may be determined based on UE capability.

The UE may separately (independently) change a receive beam for each synchronization raster to search a synchronization signal.

Frequency offset between a plurality of synchronization rasters may be defined. The frequency offset between the synchronization rasters may be equal to or different from a value of the frequency offset described in Embodiment 1-1 described above.

After detection of the SSB (which may be referred to as a detected SSB), the UE may identify a resource of another SSB. The SSB may be TDMed/FDMed.

The UE may identify an SSB to be TDMed in a manner similar to that of an existing specification (Rel. 15 to 17).

The UE may identify/determine/judge an SSB to be FDMed, based on a specific method. The specific method may be the same as at least one method described in Embodiment 1-1 described above.

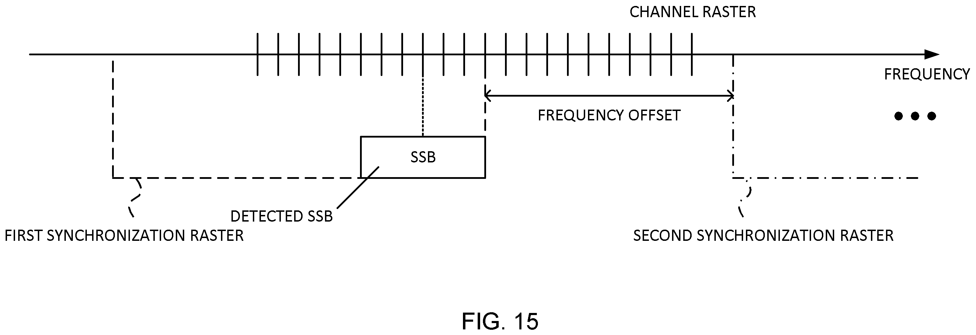

FIG. 15 is a diagram to show an example of an SSB detection method according to Embodiment 1-2. In the example shown in FIG. 15, the UE searches a plurality of synchronization rasters (first synchronization raster and second synchronization raster) and detects an SSB. Subsequently, the UE judges (resource) of another SSB to be FDMed with the detected SSB, based on predefined/configured frequency offset.

In a case where a plurality of synchronization rasters are searched in such a manner as that described above, there is a concern that a band for an SSB wider than that of an existing specification leads to increased load of synchronization signal search. It is preferable that even when an SSB to be FDMed is detected, the SSB is detected by using a band having a width as narrow as possible. A method for resolving this issue will be described below.

One synchronization raster may include a plurality of SSBs (to be FDMed). The UE may assume/expect that one synchronization raster include a plurality of SSBs (to be FDMed).

The plurality of synchronization rasters may overlap each other in a frequency domain. The plurality of synchronization rasters may fully or partially overlap each other in the frequency domain.

According to this method, a frequency band for measurement in SSB detection can be narrowed, and power efficiency of the UE can be improved. Note that the UE may be a UE that can perform a plurality of beam sweepings simultaneously.

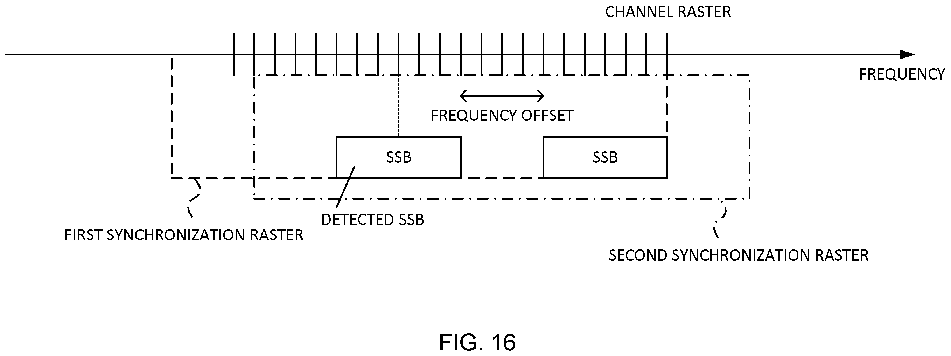

FIG. 16 is a diagram to show another example of the SSB detection method according to Embodiment 1-2. In the example shown in FIG. 16, the UE searches a plurality of synchronization rasters (first synchronization raster and second synchronization raster) and detects an SSB. In the example shown in FIG. 16, the first synchronization raster and the second synchronization raster partially overlap each other in the frequency domain.

Implementation of the UE related to reduction of processing load on the UE will be described below.

### {Embodiment 1-2-1}

The "load of synchronization signal search" in Embodiment 1-2 may be interpreted as "load / amount of memory for search of synchronization rasters in an SSB periodicity (for example, 20 ms)."

Description of the "memory" in the present embodiment below is merely an example. In the present disclosure, the memory, UE capability, and a specific function/capability may be interchangeably interpreted.

As cases related to the implementation of the UE, Cases 1 to 3 below are conceivable.

### {{Case 1}}

The UE may search SSBs with the number of SSBs to be FDMed being 1 (that is, no SSB is FDMed), at a specific SSB periodicity (for example, 20 ms).

In Case 1, the UE requires implementation of an amount of the memory required for a UE of an existing specification (for example, Rel. 15).

### {{Case 2}}

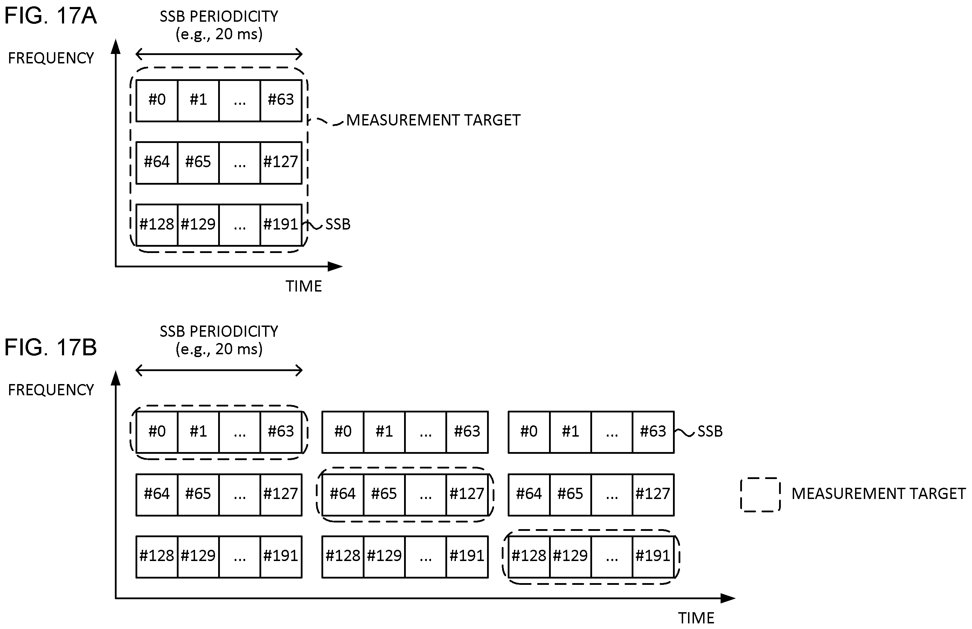

The UE may search SSBs with the number of SSBs to be FDMed being N, at a specific SSB periodicity (for example, 20 ms) (see FIG. 17A).

The UE in Case 2 may be, for example, the UE according to Embodiment 1-2 described above.

In Case 2, the UE requires implementation of an amount of the memory N times as large as the amount of the memory (and reception panels N times as many as those) required for a UE of an existing specification (for example, Rel. 15).

Note that, in Case 2, a band of the synchronization rasters may not be N times (plurality of synchronization rasters may partially/fully overlap each other) as with the above description.

### {{Case 3}}

The UE may search SSBs with the number of SSBs to be FDMed being N, at a specific SSB periodicity (for example, N×20 ms) (see FIG. 17B).

The UE in Case 3 may be, for example, the UE according to Embodiment 1-1 described above or the UE according to Embodiment 1-2 described above.

In Case 3, the UE requires implementation of an amount of the memory required for a UE of an existing specification (for example, Rel. 15).

The UE may assume an SSB periodicity having a length different from an existing SSB (SSB burst) periodicity (for example, 20 ms).

The UE that has/supports the first UE capability may assume that an SSB burst occurs at an existing periodicity (for example, 20 ms).

The UE that has/supports the first UE capability may be, for example, a UE that supports operation for Embodiment 1-1 described above. The UE that has/supports the first UE capability may be, for example, a UE that supports operation for Embodiment 1-2 described above and that has an (increased) amount of memory greater than that of the UE that supports the operation for Embodiment 1-1 described above.

The UE that has/supports the first UE capability may assume, in initial access, reception of SSBs with the number of SSBs to be FDMed being 1 (that is, no SSB is FDMed).

The UE that has/supports the second UE capability may assume that an SSB burst occurs at a periodicity (for example, N×20 ms or 20/N ms) different from an existing periodicity (for example, 20 ms).

The UE that has/supports the second UE capability may be, for example, a UE that supports operation for Embodiment 1-1 described above. The UE that has/supports the second UE capability may be, for example, a UE that supports operation for Embodiment 1-2 described above and that has an (increased) amount of memory greater than that of the UE that supports the operation for Embodiment 1-1 described above.

The UE that has/supports the second UE capability may assume, in initial access, reception of SSBs with the number of SSBs to be FDMed being N.

The UE that supports the operation for Embodiment 1-2 described above may search an SSB, based on an amount of implemented memory. In this case, an SSB (burst) periodicity may be an existing SSB periodicity (for example, 20 ms).

The UE may search a synchronization raster for each N SSBs. For example, a UE that supports operation for Embodiment 1-2 described above and that has an amount of memory equal to that of a UE that supports Embodiment 1-1 described above may search a synchronization raster for each N SSBs.

The UE may search all the synchronization rasters. For example, a UE that supports operation for Embodiment 1-2 described above and that has an amount of memory equal to that of a UE that supports Embodiment 1-1 described above may search all the synchronization rasters.

Note that, in the present disclosure, the number of synchronization rasters capable of being simultaneously measured may differ for each UE (may be reported to a NW as UE capability) or may be predefined in a specification.

In the present disclosure, each of the plurality of synchronization rasters may overlap (fully overlap), not overlap, or partially overlap another synchronization raster in the frequency domain. Which of overlap / non-overlap / partial overlap between the synchronization rasters is to be supported may be determined based on reported UE capability, or may be predefined in a specification.

In the present disclosure, the UE may receive/detect/search a plurality of synchronization rasters by using the same receive beam (reception domain filter). In the present disclosure, the UE may receive/detect/search a plurality of synchronization rasters by using respective separate receive beams (reception domain filters).

Note that, in the present disclosure, the UE including one reception panel or the UE using one reception panel may attempt to detect one SSB every specific periodicity (for example, 20 ms). In this case, the UE may clear the memory when failing to detect the SSB. An amount of the memory of the UE may be equal to an amount of memory required for a UE that supports an existing specification (for example, Rel. 15/16/17).

In the present disclosure, the UE including one reception panel or the UE using one reception panel may attempt to detect N SSBs every specific periodicity (for example, 20 ms). In this case, the UE may detect/determine an SSB with the best received power/quality (highest correlation), from among SSBs measured in a periodicity of N×20 ms. An amount of the memory of the UE may be equal to that N times as large as an amount of memory required for a UE that supports an existing specification (for example, Rel. 15/16/17).

According to Embodiment 1-2-1, it is possible to appropriately perform UE implementation for realizing Embodiment 1-2 described above.

### <<Embodiment 1-3>>

In Embodiment 1-3, time/frequency-related mapping between SSBs (which may be referred to as, for example, two-dimensional time/frequency mapping between SSBs) will be described.

### {Embodiment 1-3-1}

When a total number of SSBs exceeds a maximum number of SSBs capable of being TDMed, the SSBs may be FDMed.

When the total number of SSBs exceeds the maximum number of SSBs capable of being TDMed, the UE may assume/expect that the SSBs are FDMed.

The UE may identify/judge time/frequency-related mapping between the SSBs, based on a detected SSB index and the number of SSBs (or a maximum number of SSBs) to be FDMed (in the same time domain).

In the present disclosure, a plurality of SSBs to be TDMed (in the same frequency domain) may be referred to as an SSB group.

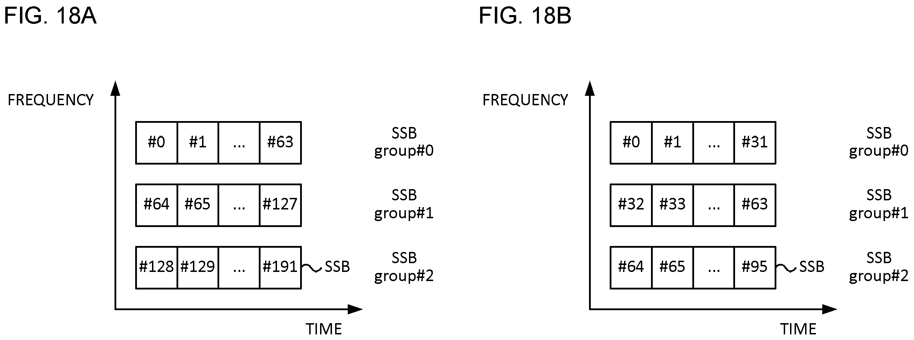

FIG. 18A is a diagram to show an example of the time/frequency mapping between the SSBs according to Embodiment 1-3-1. In the time/frequency mapping shown in FIG. 18A, SSBs #0 to #63 (SSB group #0), SSBs #64 to #127 (SSB group #1), and SSBs #128 to #191 (SSB group #2) are each TDMed, and SSB group #0, SSB group #1, and SSB group #2 are FDMed.

In the example shown in FIG. 18A, the UE judges such SSB mapping as that shown in FIG. 18A, based on a detected SSB (for example, SSB #64) and the number of SSBs to be FDMed (here, 3).

### {Embodiment 1-3-2}

Irrespective of whether a total number of SSBs exceeds a maximum number of SSBs capable of being TDMed, the SSBs may be FDMed.

Irrespective of whether the total number of SSBs exceeds the maximum number of SSBs capable of being TDMed, the UE may assume/expect that the SSBs are FDMed.

The UE may identify/judge time/frequency-related mapping between the SSBs, based on a detected SSB index, the number of SSBs (or a maximum number of SSBs) to be FDMed (in the same time domain), and a maximum number of SSBs (number of SSBs per SSB group) in a time direction.

Information related to the maximum number of SSBs (number of SSBs per SSB group) in the time direction may be broadcast by an SIB/PBCH, or may be notified by using higher layer signaling.

FIG. 18B is a diagram to show an example of the time/frequency mapping between the SSBs according to Embodiment 1-3-2. In the time/frequency mapping shown in FIG. 18B, SSBs #0 to #31 (SSB group #0), SSBs #32 to #63 (SSB group #1), and SSBs #64 to #95 (SSB group #2) are each TDMed, and SSB group #0, SSB group #1, and SSB group #2 are FDMed.

In the example shown in FIG. 18B, the UE judges such SSB mapping as that shown in FIG. 18B, based on a detected SSB (for example, SSB #32), the number of SSBs to be FDMed (here, 3), and a maximum number of SSBs in the time direction (here, 32).

According to Embodiment 1-3-2, as compared with Embodiment 1-3-1, even when the number of SSBs is the same (64) as an existing specification, SSBs can be TDMed/FDMed (SSBs can be mapped two-dimensionally in time/frequency), and latency in initial access / beam sweeping can be reduced as compared with that of an existing specification (for example, Rel. 15 to 17).

### <<Embodiment 1-4>>

In Embodiment 1-4, SSB mapping in a time domain will be described.

The SSB mapping in the time domain may be configured for a UE by using a specific parameter indicating a time position of an SSB (for example, ssb-PositionsInBurst).

The SSB mapping in the time domain may be configured/determined for each frequency (SSB group).

According to this, SSBs can be flexibly mapped in a time (frequency) resource.

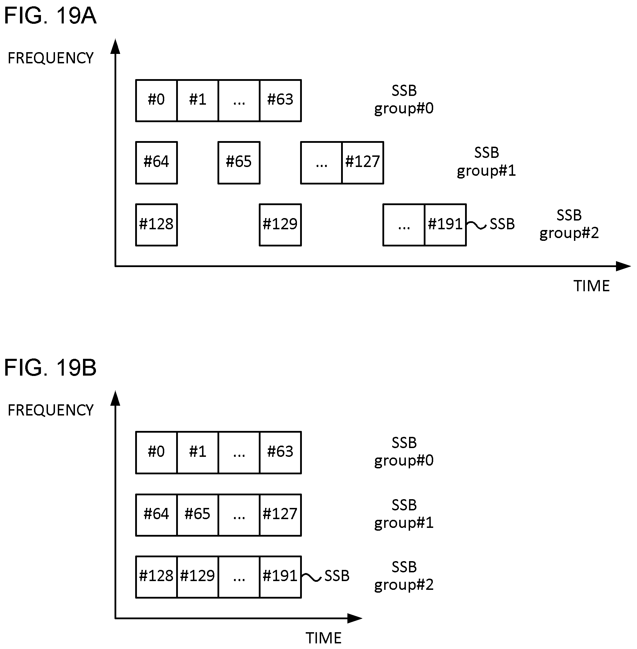

FIG. 19A is a diagram to show an example of the SSB mapping according to Embodiment 1-4. In the example shown in FIG. 19A, SSBs of SSB group #0 (SSBs #0 to #63), SSBs of SSB group #1 (SSBs #64 to #127), and SSBs of SSB group #2 (SSBs #128 to #191) are separately mapped to respective time domains.

The SSB mapping in the time domain may be configured/determined in common for a plurality of (for example, all the) frequencies (SSB groups).

According to this, overhead for signaling of a time position of an SSB (for example, SIB1) can be reduced.

FIG. 19B is a diagram to show another example of the SSB mapping according to Embodiment 1-4. In the example shown in FIG. 19B, SSBs of SSB group #0 (SSBs #0 to #63), SSBs of SSB group #1 (SSBs #64 to #127), and SSBs of SSB group #2 (SSBs #128 to #191) are mapped to a common time domain.

Note that the present embodiment describes the time domain-related mapping, but can also be similarly applied to frequency domain-related mapping. In other words, the "time domain(s)" in the present embodiment may be interpreted as "frequency domain(s)."

The examples in which SSBs in the present disclosure are mapped to continuous time domains (for example, symbols) are described, but these are merely examples. The SSBs in the present disclosure may be mapped to continuous time domains (for example, symbols), or may be mapped to discontinuous time domains (for example, symbols).

### <<Embodiment 1-5>>

In Embodiment 1-5, information and notification related to time/frequency domain mapping for an SSB group will be described.

One or more SSB groups may correspond to a UE. In the present disclosure, the corresponding SSB group may be referred to as its own SSB group or a first SSB group. In the present disclosure, an SSB group different from its own SSB group may be referred to as another SSB group or a second SSB group.

The information related to the time/frequency domain mapping for the SSB group may be, for example, at least one of a specific parameter indicating a time position of an SSB (for example, ssb-PositionsInBurst) and information related to the frequency offset described in Embodiment 1-1/1-2 described above.

The information related to the time/frequency domain mapping for the SSB group may be broadcast by an SIB/PBCH. For example, the information related to the time/frequency domain mapping for the SSB group may be included in a serving cell configuration (for example, ServingCellConfigCommonSIB) in SIB1.

The information related to the time/frequency domain mapping for the SSB group may be notified by higher layer signaling (RRC signaling). For example, the information related to the time/frequency domain mapping for the SSB group may be included in a serving cell configuration (for example, ServingCellConfigCommon) with RRC signaling.

### {Embodiment 1-5-1}

The UE may receive information related to time/frequency domain mapping for its own SSB group via broadcast information (for example, SIB1/PBCH). The UE may receive information related to time/frequency domain mapping for another SSB group via RRC signaling.

According to Embodiment 1-5-1, the UE does not need to recognize the presence of another SSB group, thereby allowing a payload (number of bits / size) of broadcast information (for example, SIB1) to be reduced.

The UE may receive, via broadcast information (for example, SIB1), information indicating whether another SSB group is present (or information related to a total number of SSBs).

### {Embodiment 1-5-2}

The UE may receive information related to time/frequency domain mapping for its own SSB group via broadcast information (for example, SIB1/PBCH). The UE may receive information related to time/frequency domain mapping for another SSB group via broadcast information (for example, SIB1/PBCH).

The UE may receive, via RRC signaling, information related to another SSB group other than the information related to the time/frequency domain mapping for another SSB group.

According to the first embodiment above, an SSB to be TDMed/FDMed can be appropriately received/measured/detected/searched in initial access.

### <Second Embodiment>

A second embodiment relates to a physical random access channel (PRACH).

The present embodiment may be applied to, for example, the UE in Option 2 described above.

N (for example, 64) SSBs configured for the UE may be TDMed (in the same frequency domain).

M SSBs configured for the UE may be FDMed (in the same time domain).

N×M SSBs may be configured/transmitted.

In this case, N×M PRACH resources/preambles may be defined/configured.

Option 2 described above may be applied to transmission/reception using multi-TRP/panel. In this case, for example, the UE / base station may simultaneously perform signal transmissions/receptions by using a plurality of beams of QCL type D.

The PRACH resources may be TDMed/FDMed/SDMed/CDMed.

The SSB and the PRACH resource/preamble may correspond to each other. Correspondence between the SSB and the PRACH resource/preamble may be defined/configured.

The UE may select a PRACH resource/preamble corresponding to a detected SSB to transmit a PRACH.

A transmit beam (spatial domain filter) for the transmitted PRACH may be the same as a reception spatial domain filter used to receive the detected SSB.

In the present disclosure, the PRACH may be a PRACH in contention-based random access (CBRA), or may be a PRACH in contention-free random access (CFRA). For example, the present embodiment may be applied only to a PRACH in CBRA or a PRACH in CBFA.

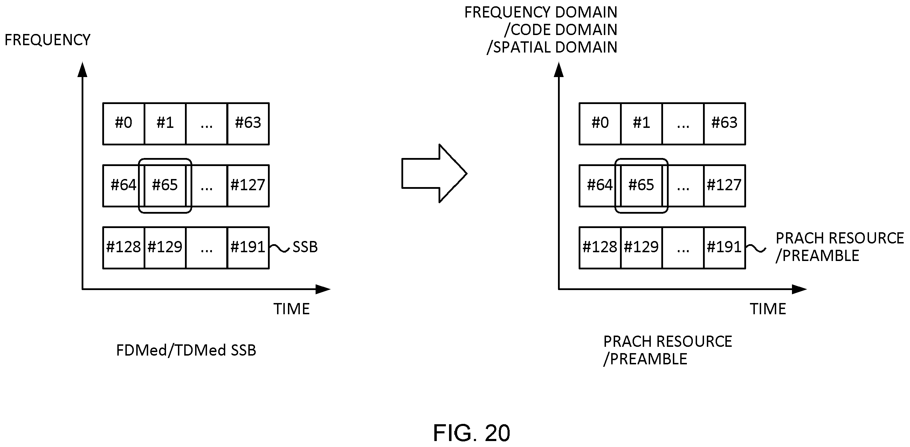

FIG. 20 is a diagram to show an example of the PRACH resource/preamble according to the second embodiment. In the example shown in FIG. 20, 192 SSBs are configured. In the example shown in FIG. 20, SSB #n and PRACH resource/preamble #n correspond to each other. In the example shown in FIG. 20, the UE detects SSB #65 and transmits a PRACH in corresponding PRACH resource #65.

As shown in the example shown in FIG. 20, PRACH resources/preambles may be TDMed and FDMed/CDMed/SDMed.

Note that FIG. 20 described above shows an example in which an SSB and a PRACH corresponding to each other are identified by an index of the same value, but the SSB and the PRACH corresponding to each other may be identified by respective indices of different values. For example, an index related to a corresponding PRACH may be derived from an SSB index, based on a specific mathematical expression.

According to the second embodiment above, a PRACH for an SSB to be TDMed/FDMed/SDMed/CDMed can be appropriately transmitted.

### <Third Embodiment>

A third embodiment relates to a random access response (RAR).

The present embodiment may be applied to, for example, the UE in Option 2 described above.

The present embodiment may be applied to, for example, an RAR transmitted for the PRACH described in the second embodiment described above.

The number of resources (for example, RAR windows) for receiving an RAR may be less than N×M. For example, the number of resources (for example, RAR windows) for receiving an RAR may be N.

The UE may attempt to receive an RAR in an RAR window corresponding to a transmitted PRACH.

The UE may receive a corresponding RAR by using a reception spatial domain filter for a detected SSB (or the same reception spatial domain filter as a transmission spatial domain filter for a transmitted PRACH).

An RAR window configuration (for example, ra-ResponseWindow included in SIB1) may configured for each SSB. An RAR window configuration (for example, ra-ResponseWindow included in SIB1) may configured for each plurality of SSBs. The plurality of SSBs may be a plurality of SSBs FDMed in the same time domain.

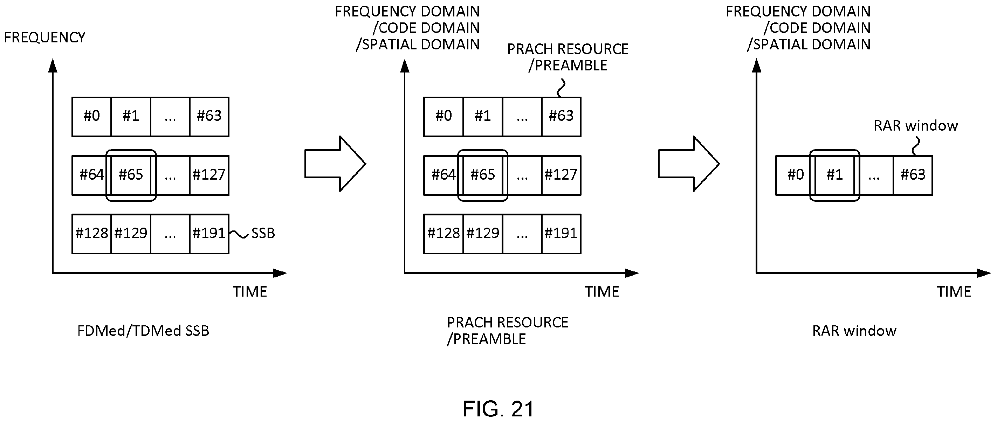

FIG. 21 is a diagram to show an example of the RAR according to the third embodiment. In the example shown in FIG. 21, the UE detects an SSB (SSB #65) and transmits a PRACH (PRACH #65) corresponding to the detected SSB. In the example shown in FIG. 21, 64 SSBs/PRACHs are TDMed.

In the example shown in FIG. 21, SSB/PRACH #n and RAR window #n-64×m (m = 0, 1, 2) correspond to each other. The UE attempts to receive an RAR in RAR window #1 corresponding to PRACH #65.

The number of resources (for example, RAR windows) for receiving the RAR may be N×M. For example, the resources for receiving the RAR may be defined as mapping in a time/frequency direction (two-dimensional time/frequency mapping).

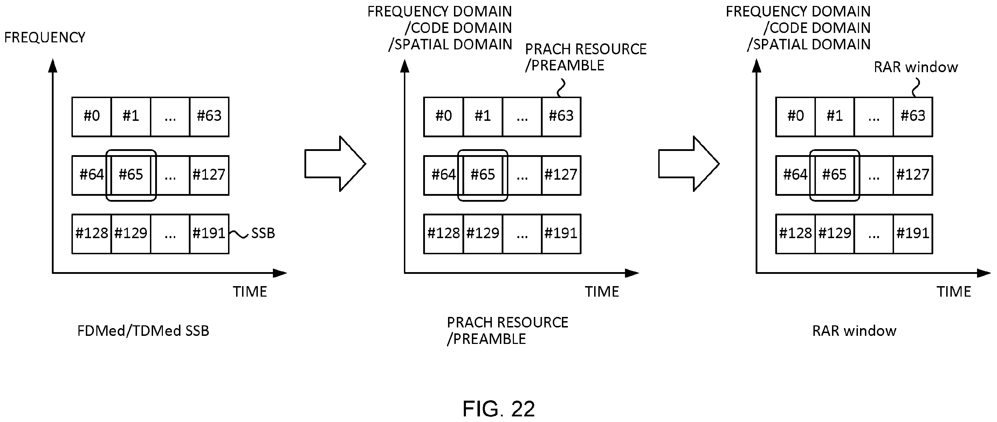

FIG. 22 is a diagram to show another example of the RAR according to the third embodiment. In the example shown in FIG. 22, the UE detects an SSB (SSB #65) and transmits a PRACH (PRACH #65) corresponding to the detected SSB. In the example shown in FIG. 22, 64 SSBs/PRACHs are TDMed.

In the example shown in FIG. 22, SSB/PRACH #n and RAR window #n correspond to each other. The UE attempts to receive an RAR in RAR window #65 corresponding to PRACH #65.

Note that each of FIGS. 21 and 22 described above shows an example in which an SSB, a PRACH, and an RAR window corresponding to each other are identified by an index of the same value, but the SSB, the PRACH, and the RAR window corresponding to each other may be identified by respective indices of different values. For example, at least one of a corresponding SSB index, an index related to a corresponding PRACH, and an index of a corresponding RAR window may be derived from one of an SSB index, an index related to a PRACH, and an index of a corresponding RAR window, based on a specific mathematical expression.

According to the third embodiment above, an RAR for an SSB/PRACH to be TDMed/FDMed/SDMed/CDMed can be appropriately received.

### <Supplement>

### {Notification of Information to UE}

Any notification of information (from a network (NW) (for example, a base station (BS))) to a UE (in other words, any reception, in the UE, of information from the BS) in the above-described embodiments may be performed by using physical layer signaling (for example, DCI), higher layer signaling (for example, RRC signaling, a MAC CE), a specific signal/channel (for example, a PDCCH, a PDSCH, a reference signal), or combinations of these.

In a case where the notification described above is performed by a MAC CE, the MAC CE may be identified by a new logical channel ID (LCID) being included in a MAC sub-header, the new logical channel ID being not defined in an existing specification.

In a case where the notification described above is performed by DCI, the notification described above may be performed by using a specific field of the DCI, a radio network temporary identifier (RNTI) used to scramble a cyclic redundancy check (CRC) bit attached to the DCI, a format of the DCI, and the like.

Any notification of information to the UE in the above-described embodiments may be performed periodically, semi-persistently, or aperiodically.

### {Notification of Information from UE}

Any notification of information from a UE (to a NW) (in other words, any transmission/reporting, in the UE, of information to the BS) in the above-described embodiments may be performed by using physical layer signaling (for example, UCI), higher layer signaling (for example, RRC signaling, a MAC CE), a specific signal/channel (for example, a PUCCH, a PUSCH, a PRACH, a reference signal), or combinations of these.

In a case where the notification described above is performed by a MAC CE, the MAC CE may be identified by a new LCID being included in a MAC sub-header, the new LCID being not defined in an existing specification.

In a case where the notification described above is performed by UCI, the notification described above may be transmitted by using a PUCCH or a PUSCH.

Any notification of information from the UE in the above-described embodiments may be performed periodically, semi-persistently, or aperiodically.

### {Application of Respective Embodiments}

At least one of the above-described embodiments may be applied to a case where a specific condition is satisfied. The specific condition may be defined in a specification, or may be notified to the UE/BS by using higher layer signaling / physical layer signaling.

At least one of the above-described embodiments may be applied only to a UE that has reported specific UE capability or that supports the specific UE capability.

The specific UE capability may indicate at least one of the following:
- supporting specific processing/operation/control/information for at least one of the above-described embodiments (for example, reception of more than 64 SSBs, reception of SSBs to be TDMed/FDMed with each other);
- supporting transmission/reception using a plurality of reception/transmission panels; and
- the number (maximum number) of supported SSBs in a time/frequency direction.

The specific UE capability described above may be capability applied across all the frequencies (commonly irrespective of frequency), capability per frequency (for example, one or combinations of a cell, a band, a band combination, a BWP, a component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability described above may be capability applied over all the duplex schemes (commonly irrespective of duplex scheme) or capability per duplex scheme (for example, time division duplex (TDD) or frequency division duplex (FDD)).

At least one of the above-described embodiments may be applied to a case where specific information associated with the above-described embodiments (or operation for the above-described embodiments) is configured/activated/triggered for the UE by higher layer signaling / physical layer signaling. For example, the specific information may be information indicating enabling of reception of more than 64 SSBs, information indicating enabling of reception of SSBs to be TDMed/FDMed with each other, any RRC parameter for a specific release (for example, Rel. 18/19), or the like.

In a case where the UE does not support at least one of the specific UE capability or is not configured with the specific information, the UE may apply, for example, Rel-15/16 operation.

### (Supplementary Note A)

Regarding one embodiment of the present disclosure, the following supplementary notes of the invention will be given.

### {Supplementary Note A-1}

A terminal including: a control section that determines one of operation for searching SSBs with all SSB indices in a plurality of synchronization signal block (SSB) groups and operation for searching an SSB with a specific SSB index in the plurality of SSB groups, the plurality of SSB groups being frequency division multiplexed, one of the plurality of SSB groups including a plurality of SSBs to be time division multiplexed; and
a receiving section that detects one SSB in the plurality of SSB groups.

### {Supplementary Note A-2}

The terminal according to supplementary note A-1, wherein the control section judges an SSB to be frequency division multiplexed with the detected one SSB, based on frequency offset for an SSB.

### {Supplementary Note A-3}

The terminal according to supplementary note A-1 or A-2, wherein the control section searches at least one of a plurality of SSBs in the plurality of SSB groups by using a plurality of synchronization rasters.

### {Supplementary Note A-4}

The terminal according to any one of supplementary notes A-1 to A-3, wherein the control section searches at least one of a plurality of SSBs in the plurality of SSB groups by using a plurality of synchronization rasters, and
the plurality of synchronization rasters at least partially overlap each other in a frequency domain.

### (Supplementary Note B)

Regarding one embodiment of the present disclosure, the following supplementary notes of the invention will be given.

### {Supplementary Note B-1}

A terminal including: a receiving section that receives one SSB of a plurality of SSBs in a plurality of SSB groups, the plurality of SSB groups being frequency division multiplexed, one of the plurality of SSB groups including a plurality of SSBs to be time division multiplexed; and
a control section that determines one physical random access channel (PRACH) resource corresponding to the one SSB, from among a plurality of PRACH resources corresponding to the plurality of synchronization signals in the plurality of SSB groups.

### {Supplementary Note B-2}

The terminal according to supplementary note B-1, wherein the plurality of PRACH resources are a plurality of PRACH resources to be frequency division multiplexed and time division multiplexed.

### {Supplementary Note B-3}

The terminal according to supplementary note B-1 or B-2, wherein the control section judges a random access response (RAR) window corresponding to the one PRACH resource, and the RAR window is one RAR window of a plurality of RAR windows to be time division multiplexed.

### {Supplementary Note B-4}

The terminal according to any one of supplementary notes B-1 to B-3, wherein the control section judges a random access response (RAR) window corresponding to the one PRACH resource, and the RAR window is one RAR window of a plurality of RAR windows to be time division multiplexed and frequency division multiplexed.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

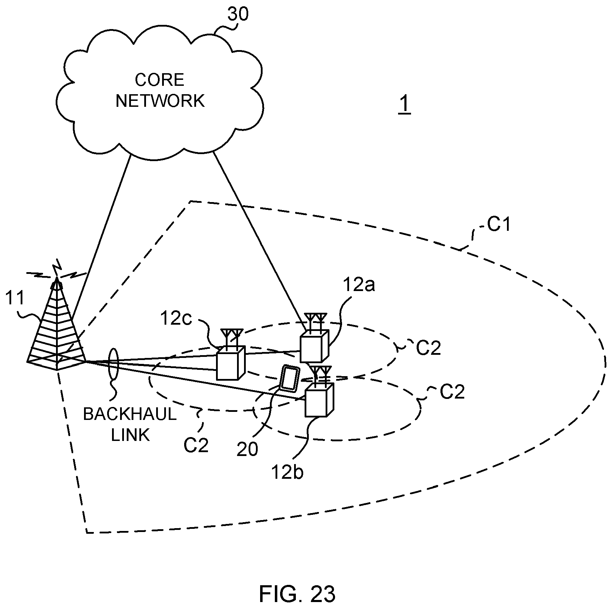

FIG. 23 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR), and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

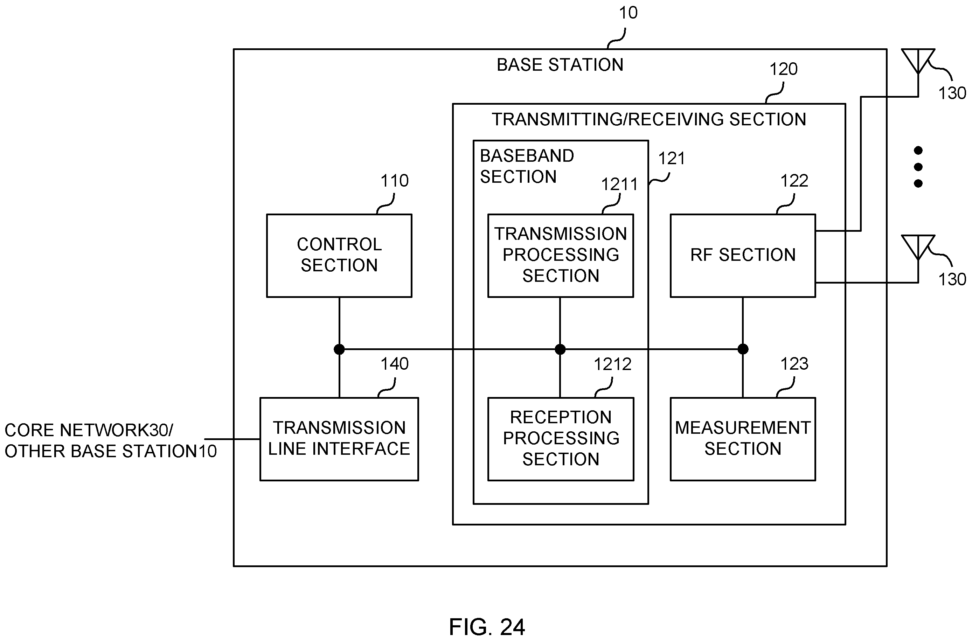

FIG. 24 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may indicate one of operation for searching SSBs with all SSB indices in a plurality of synchronization signal block (SSB) groups and operation for searching an SSB with a specific SSB index in the plurality of SSB groups. The plurality of SSB groups may be frequency division multiplexed, and one of the SSB groups may include a plurality of SSBs to be time division multiplexed. The transmitting/receiving section 120 may transmit an SSB in the plurality of SSB groups (zero-th and first embodiments).

The transmitting/receiving section 120 may transmit a plurality of SSBs in a plurality of SSB groups. The plurality of SSB groups may be frequency division multiplexed, and one of the SSB groups may include a plurality of SSBs to be time division multiplexed. The control section 110 may control reception of a PRACH transmitted by using one physical random access channel (PRACH) resource corresponding to one SSB of the plurality of SSBs, from among a plurality of PRACH resources corresponding to the plurality of synchronization signals in the plurality of SSB groups (first and second embodiments).

### (User Terminal)

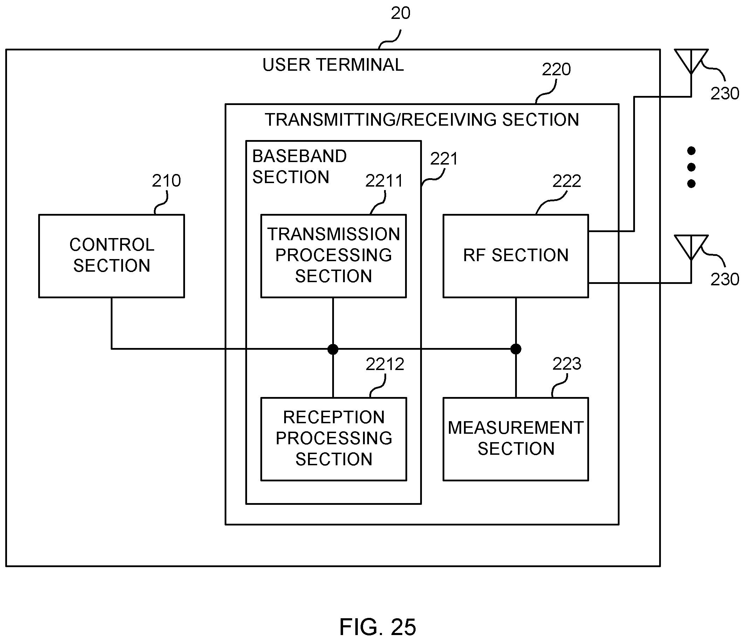

FIG. 25 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The control section 210 may determine one of operation for searching SSBs with all SSB indices in a plurality of synchronization signal block (SSB) groups and operation for searching an SSB with a specific SSB index in the plurality of SSB groups. The plurality of SSB groups may be frequency division multiplexed, and one of the SSB groups may include a plurality of SSBs to be time division multiplexed. The transmitting/receiving section 220 may detect one SSB in the plurality of SSB groups (zero-th and first embodiments).

The control section 210 may judge an SSB to be frequency division multiplexed with the detected one SSB, based on frequency offset for an SSB (first embodiment).

The control section 210 may search at least one of a plurality of SSBs in the plurality of SSB groups by using a plurality of synchronization rasters (first embodiment).

The control section 210 may search at least one of a plurality of SSBs in the plurality of SSB groups by using a plurality of synchronization rasters. The plurality of synchronization rasters may at least partially overlap each other in a frequency domain (first embodiment).

The transmitting/receiving section 220 may receive one SSB of a plurality of SSBs in a plurality of SSB groups. The plurality of SSB groups may be frequency division multiplexed, and one of the SSB groups may include a plurality of SSBs to be time division multiplexed. The control section 210 may determine one physical random access channel (PRACH) resource corresponding to the one SSB, from among a plurality of PRACH resources corresponding to the plurality of synchronization signals in the plurality of SSB groups (first and second embodiments).

The plurality of PRACH resources may be a plurality of PRACH resources to be frequency division multiplexed and time division multiplexed (second embodiment).

The control section 210 may judge a random access response (RAR) window corresponding to the one PRACH resource. The RAR window may be one RAR window of a plurality of RAR windows to be time division multiplexed (second embodiment).

The control section 210 may judge a random access response (RAR) window corresponding to the one PRACH resource. The RAR window may be one RAR window of a plurality of RAR windows to be time division multiplexed and frequency division multiplexed (second embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

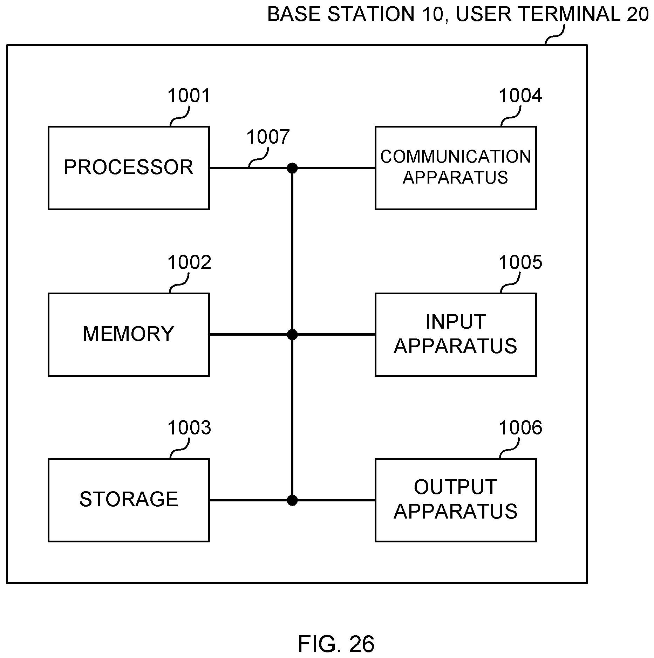

For example, a base station, a user terminal, and so on according to one embodiment of the present disclosure may function as a computer that executes the processes of the radio communication method of the present disclosure. FIG. 26 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

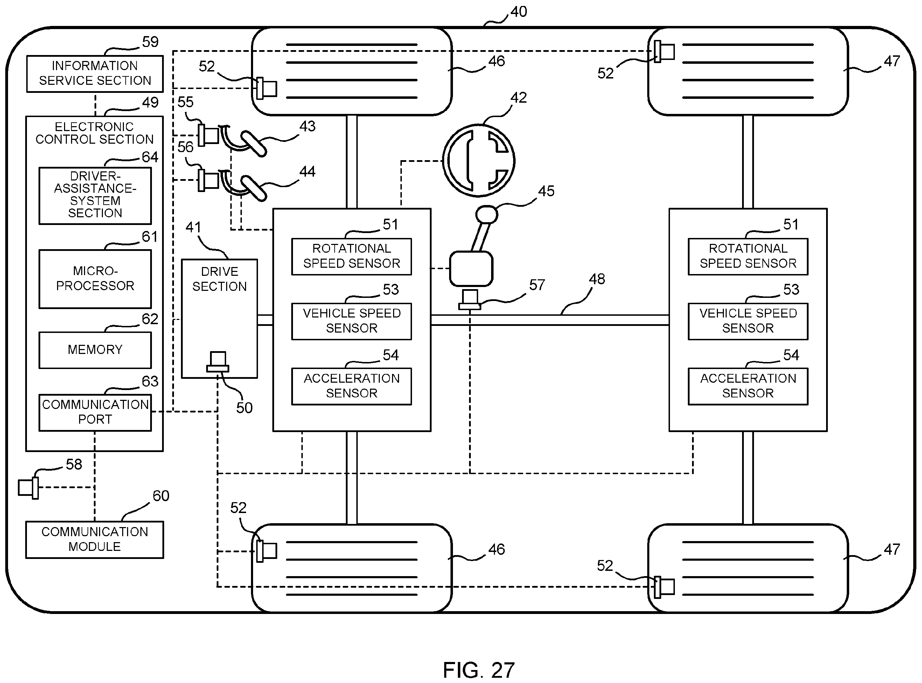

FIG. 27 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a control section that determines one of operation for searching SSBs with all SSB indices in a plurality of synchronization signal block (SSB) groups and operation for searching an SSB with a specific SSB index in the plurality of SSB groups, the plurality of SSB groups being frequency division multiplexed, one of the plurality of SSB groups including a plurality of SSBs to be time division multiplexed; and
a receiving section that detects one SSB in the plurality of SSB groups.

2. The terminal according to claim 1, wherein
the control section judges an SSB to be frequency division multiplexed with the detected one SSB, based on frequency offset for an SSB.

3. The terminal according to claim 1, wherein
the control section searches at least one of a plurality of SSBs in the plurality of SSB groups by using a plurality of synchronization rasters.

4. The terminal according to claim 1, wherein
the control section searches at least one of a plurality of SSBs in the plurality of SSB groups by using a plurality of synchronization rasters, and
the plurality of synchronization rasters at least partially overlap each other in a frequency domain.

5. A radio communication method for a terminal, the radio communication method comprising:
determining one of operation for searching SSBs with all SSB indices in a plurality of synchronization signal block (SSB) groups and operation for searching an SSB with a specific SSB index in the plurality of SSB groups, the plurality of SSB groups being frequency division multiplexed, one of the plurality of SSB groups including a plurality of SSBs to be time division multiplexed; and
detecting one SSB in the plurality of SSB groups.

6. A base station comprising:
a control section that indicates one of operation for searching SSBs with all SSB indices in a plurality of synchronization signal block (SSB) groups and operation for searching an SSB with a specific SSB index in the plurality of SSB groups, the plurality of SSB groups being frequency division multiplexed, one of the plurality of SSB groups including a plurality of SSBs to be time division multiplexed; and
a transmitting section that transmits an SSB in the plurality of SSB groups.
